# EUROPÄISCHE PATENTANMELDUNG

(11) **EP 0 758 726 A2**
(43) Veröffentlichungstag der Anmeldung: **19.02.1997**
(21) Anmeldenummer: 96111384.2
(22) Anmeldetag: 15.07.1996
(51) Int. Cl.: F16H 61/28, B60K 41/06

(54) **Steuerung für ein Kraftfahrzeug mit einem automatischen Getriebe**

(30) Priorität: 11.08.1995 DE 19529665
(71) Anmelder: SIEMENS AKTIENGESELLSCHAFT, 80333 München (DE)
(72) Erfinder: Beer, Stefan, 93164 Laaber (DE); Stärker, Klaus, Dr., 93073 Neutraubling (DE)

(57) **Zusammenfassung**

Eine Steuerung 1 für ein Kraftfahrzeug mit einem automatischen Getriebe 3 ist mit Sensoren 22 in dem Getriebe und über einen Kommunikationskanal mit einer Motorsteuerung verbunden. Die Getriebeübersetzung wird mit Aktuatoren verändert, durch die Stellglieder 25 in dem Getriebe betätigt werden. Das Getriebe 3 und die elektronische Getriebesteuerung 2 sind als integriertes Gesamtsystem ausgebildet, das sämtliche mechanischen, hydraulischen und elektronischen Getriebekomponenten 3, 20, 22, 24 bis 26 einschließt. Ein Stecker 18 bildet eine druck- und fluiddichte Verbindung zwischen dem Getriebe 3 und der an dem Getriebegehäuse 14 befestigten Getriebesteuerung.

## Beschreibung

Die Erfindung betrifft eine Steuerung mit den Merkmalen des Oberbegriffs von Anspruch 1.

Derartige Steuerungen werden in Kraftfahrzeugen mit automatischem Getriebe eingesetzt und sie schließen eine elektronische Getriebesteuerung ein, die durch einen Kommunikationskanal oder einen sonstigen Nachrichtenweg mit einer Motorsteuerung verbunden ist. Die Motorsteuerung oder Teile von ihr können auch in einer Einheit mit der Getriebesteuerung zusammengefaßt sein. Die Getriebesteuerung wertet Informationen von der Motorsteuerung und Signale von verschiedenen Sensoren in dem Getriebe und gegebenenfalls von anderen Sensoren in dem Kraftfahrzeug aus und gibt Steuersignale an Aktuatoren oder Aktoren des Getriebes ab, durch die Reibelemente betätigt und damit Schaltvorgänge ausgeführt werden oder bei stufenlosen Getrieben die Getriebeübersetzung verändert wird.

Bei einem bekannten Getriebesteuersystem sind elektrische, mechanische, hydraulische und elektronische Steuermittel innerhalb des Getriebegehäuses angeordnet. Eine Leiterplatte, die teilweise von Öl umgeben ist, trägt eine Steuerelektronik (DE 93 07 228.7 U1). Um an das Steuersystem, z. B. im Reparaturfall, zu gelangen, muß das gesamte Getriebegehäuse geöffnet oder abgenommen werden.

Der Erfindung liegt die Aufgabe zugrunde, eine leicht demontierbare Steuereinrichtung für ein Kraftfahrzeuggetriebe zu schaffen, die mit dem automatischen Getriebe ein Gesamtsystem bildet, das als Baueinheit getestet, geliefert und komplett in das Kraftfahrzeug eingebaut werden kann. Bei einer bekannten Steuerung für ein Kraftfahrzeug ist die Getriebesteuerung an dem Gehäuse des Getriebes befestigt, sind die Spulen der elektrohydraulischen Drucksteuerventile in die Getriebesteuerung integriert und werden Sensorsignale drahtlos an die Getriebesteuerung übertragen (DE-C 43 34 595).

Der Erfindung liegt die Aufgabe zugrunde, den Verkabelungsaufwand für die Verbindung der elektronischen Steuerung mit dem Getriebe weiter zu verringern und eine Steuerung zu schaffen, die mit dem automatischen Getriebe ein Gesamtsystem bildet, das als Baueinheit getestet, geliefert und komplett in das Kraftfahrzeug eingebaut werden kann.

Diese Aufgabe wird erfindungsgemäß durch eine Steuerung nach Anspruch 1 gelöst.

Zweckmäßige Weiterbildungen der Erfindung sind in den Unteransprüchen niedergelegt.

Ein Ausführungsbeispiel der Erfindung wird im folgenden anhand der Zeichnung erläutert. Es zeigen:

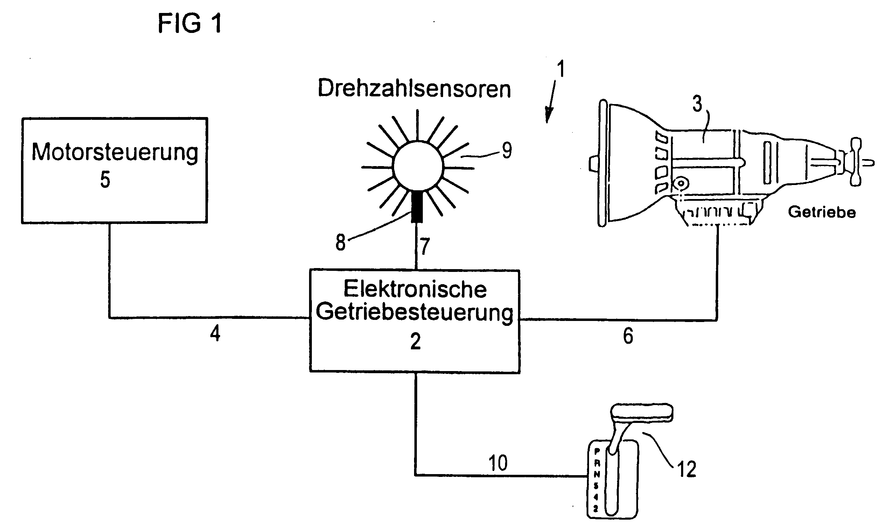

- Figur 1: eine schematische Gesamtdarstellung der Bestandteile einer Steuerung für ein Kraftfahrzeug und
- Figur 2: ein Ausführungsbeispiel einer erfindungsgemäßen Steuerung.

Eine Steuerung 1 für ein hier nicht dargestelltes Kraftfahrzeug weist eine elektronische Getriebesteuerung 2 für ein automatisches Getriebe 3 auf. Die Getriebesteuerung 2 ist über einen Kommunikationskanal 4 mit einer Motorsteuerung 5 und durch Signal- und Steuerleitungen 6 mit dem automatischen Getriebe 3 verbunden. Der Kommunikationskanal kann z.B. als Kabelbaum oder als Datenbus ausgebildet sein.

Die Getriebesteuerung ist über eine Leitung 7 mit einem Drehzahlsensor 8 verbunden, der die Umdrehungen eines gezahnten Rades 9 abtastet, das z.B. auf der Kurbelwelle eines hier nicht dargestellten Motors sitzt. Der Drehzahlsensor 8 ist hier nur als Beispiel für mehrere in dem Kraftfahrzeug vorhandene Drehzahlsensoren dargestellt. Die Getriebesteuerung 2 ist schließlich über eine Leitung 10 mit einem Wählhebel 12 für das automatische Getriebe 3 verbunden.

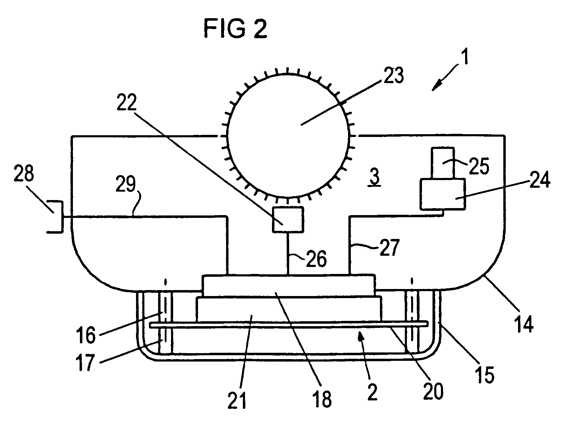

Die konstruktive Gestaltung der erfindungsgemäßen Steuerung 1 wird nun anhand von Figur 2 erläutert. Ein hier nicht in Einzelheiten dargestelltes automatisches Getriebe ist in einem Getriebegehäuse 14 untergebracht. Auf diesem Gehäuse sitzt ein Deckel 15, der durch Befestigungselemente 16, 17 starr mit ihm verbunden ist und die elektronische Getriebesteuerung 2 enthält. Ein Stecker 18 stellt eine druck- und fluiddichte Verbindung zwischen Steuergerät 2 und dem Getriebegehäuse 14 und damit dem in diesem enthaltenen Getriebe her. Die elektrischen und elektronischen Schaltungsbestandteile - die hier im einzelnen nicht dargestellt sind - sind auf einer Leiterplatte 20 befestigt. Der Stecker 18 ist mit der Leiterplatte 20 über ein Steckergegenstück 21 verbunden. Das Steckergegenstück 21 kann (wie dargestellt) direkt auf die Leiterplatte 20 aufgelötet oder mit ihr über eine kurze Leitung elektrisch verbunden sein. Die Leiterplatte 20 ist entweder durch die Befestigungselemente 16 an dem Getriebegehäuse 14 oder über die Befestigungselemente 17 an dem Deckel 15 befestigt.

Im Getriebe vorhandene Sensoren und Aktuatoren sind mit der getriebeinnerenseite des Steckers 18 verbunden. Stellvertretend für weitere Sensoren und Aktuatoren sind hier ein Drehzahlsensor 22, der einem Zahnrad 23 gegenüberliegt, und ein Aktuator oder Stellglied 24 für ein hydraulisches Ventil 25 dargestellt, die über eine Signalleitung 26 bzw. eine Steuerleitung 27 mit dem Stecker 18 verbunden sind.

Die Getriebesteuerung 2 ist über einen weiteren Stecker 28, der durch eine Leitung 29 an den Stecker 18 angeschlossen ist, mit anderen Steuergeräten, z.B. der Motorsteuerung 5 und anderen Sensoren, z.B. dem Drehzahlsensor 8, sowie mit einer hier nicht dargestellten Versorgungsspannungsquelle in dem Kraftfahrzeug verbunden.

Eine weitere Reduzierung der Verkabelungsaufwandes wird dadurch erreicht, daß der nicht dargestellte Wählhebelschalter des Wählhebels 12 ebenfalls innerhalb des Getriebegehäuses 14 angeordnet ist. Der Wählhebelschalter wird dann über eine ohnehin vorhandene mechanische Verbindung zwischen dem Wählhebel 12 und dem automatischen Getriebe 3 betätigt.

Zusammenfassend wird die erfindungsgemäße Steuerung 1 wie folgt dargestellt. Die Steuerung 1 für ein Kraftfahrzeug mit einem automatischen Getriebe 3 ist mit Sensoren 22 in dem Getriebe und über einen Kommunikationskanal mit einer Motorsteuerung 5 verbunden. Die Getriebeübersetzung wird mit Aktuatoren verändert, durch die Stellglieder 25 in dem Getriebe betätigt werden. Das Getriebe 3 und die elektronische Getriebesteuerung 2 sind als integriertes Gesamtsystem ausgebildet, das sämtliche mechanischen, hydraulischen und elektronischen Getriebekomponenten 3, 20, 22, 24 bis 26 einschließt. Ein Stecker 18 bildet eine druck- und fluiddichte Verbindung zwischen dem Getriebe 3 und der an dem Getriebegehäuse 14 befestigten Getriebesteuerung 2.

## Patentansprüche

1. Steuereinrichtung (1) für ein Kraftfahrzeug mit einem automatischen Getriebe (3), die mit Sensoren (22) in dem Getriebe verbunden ist, wobei:
- die Getriebeübersetzung mit Aktuatoren (24) verändert wird, durch die Stellglieder in dem Getriebe betätigt werden,
- das Getriebe als integriertes Gesamtsystem ausgebildet ist, das sämtliche mechanischen, hydraulischen und elektronischen Getriebekomponenten (3, 20, 22, 24 - 26) einschließt, und
- die Steuereinrichtung mit einem Stecker (18) versehen ist, der mit einer Leiterplatte (20) verbunden ist, auf der die elektronischen Bestandteile der Getriebesteuerung (2) montiert sind, **dadurch gekennzeichnet,**
- daß die Steuereinrichtung (1) durch einen Kommunikationskanal (4) mit einer Motorsteuerung (5) verbunden ist;
- daß der Stecker (18) über ein Steckergegenstück (21) mit der Leiterplatte (20) verbunden ist, und
- daß durch den Stecker eine druck- und fluiddichte Verbindung zwischen dem Getriebe (3) und der an dem Getriebegehäuse (14) befestigten Getriebesteuerung (2) gebildet wird.

2. Steuereinrichtung nach Anspruch 1, dadurch gekennzeichnet, daß sie mit einem Wählhebelschalter versehen ist, der innerhalb des Getriebegehäuses (14) angeordnet und mechanisch mit einem Wählhebel (12) verbunden ist.
